# EUROPÄISCHE PATENTSCHRIFT

(11) **EP 1 131 676 B1**
(45) Veröffentlichungstag und Bekanntmachung des Hinweises auf die Patenterteilung: **10.05.2006**
(21) Anmeldenummer: 99963297.9
(22) Anmeldetag: 12.11.1999
(51) Int. Cl.: G03F 7/004

(54) **WÄSSRIGE DISPERSIONEN MIT IONISCHEM DISPERGIERMITTEL**
AQUEOUS DISPERSIONS WITH IONIC DISPERSANTS
DISPERSIONS AQUEUSES CONTENANT UN AGENT DISPERSANT IONIQUE

(30) Priorität: 21.11.1998 DE 19853779
(43) Veröffentlichungstag der Anmeldung: 12.09.2001
(73) Patentinhaber: BASF Aktiengesellschaft, 67056 Ludwigshafen (DE)
(72) Erfinder: SCHWALM, Reinhold, D-67157 Wachenheim (DE); PAULUS, Wolfgang, D-55270 Ober-Olm (DE)
(86) Internationale Anmeldenummer: PCT/EP1999/008743
(87) Internationale Veröffentlichungsnummer: WO 2000/031590

(56) Entgegenhaltungen:
- EP-A- 0 330 209
- EP-A- 0 380 007
- WO-A-93/14864

## Beschreibung

Die vorliegende Erfindung betrifft wäßrige Dispersionen von chemischen Verbindungen a), wobei die Verbindungen mit Hilfe eines ionischen Dispergiermittels b) dispergiert sind und die ionischen Gruppen des Dispergierhilfsmittels durch Bestrahlung mit energiereichem Licht in nichtionische Gruppen umwandelbar sind, dadurch gekennzeichnet, daß es sich bei den Verbindungen a) um strahlungshärtbare Verbindungen handelt.

Weiterhin betrifft die Erfindung die Verwendung der wäßrigen Dispersionen zur Herstellung von Beschichtungen und Formkörpern. Emulgatoren, Schutzkolloide oder allgemein Dispergierhilfsmittel mit ionischen Gruppen eignen sich bekannterweise gut zur Stabilisierung von wäßrigen Emulsionen oder Dispersionen. Bei der späteren Verwendung verbleiben die Dispergierhilfsmittel im Endprodukt und führen oft zu unerwünschten Eigenschaften. Ionische Gruppen beeinträchtigen insbesondere die Wasserfestigkeit der Endprodukte, z.B. von Beschichtungen.

Gewünscht ist daher, die gute dispergierende bzw. stabilisierende Wirkung von Dispergierhilfsmitteln mit ionischen Gruppen zu nutzen, andererseits aber die damit verbundenen Nachteile bei der späteren Verwendung zu vermeiden.

Aus EP-A 164100 und EP-A 212 372 sind ionische Gruppen bekannt, welche sich durch Bestrahlung mit energiereichem Licht in nichtionische Gruppen umwandeln.

In der WO 93/14864 wird ein ionisches Dispergiermittel beschrieben, das in wäßrigen Dispersionen verwendet werden kann, umfassend einen hydrophoben und einen hydrophilen Teil, wobei der hydrophile Teil ein Fettsäurederivat, ein Oligomer oder ein Polymer und der hydrophile Teil eine endständige Diazogruppe mit mindestens einer daran gekoppelten Säuregruppe sein kann.

Aufgabe der vorliegenden Erfindung waren wäßrige Dispersionen von mit ionischen Dispergierhilfsmitteln dispergierten Verbindungen, welche bei der späteren Verwendung nicht die mit ionischen Gruppen verbundenen Nachteile zeigen.

Demgemäß wurden die eingangs definierten wäßrigen Dispersionen gefunden.

Die Dispergiermittel b) enthalten ionische Gruppen, welche durch Bestrahlung mit energiereichem Licht, z.B. UV-Licht oder Elektronenstrahlen in nichtionische Gruppen umgewandelt werden.

Als geeignete ionische Gruppen seien z.B. Pyridinylid-, Benzylammoniumsalz- oder Sulfoniumsalzgruppen genannt.

Die photochemische Umwandlung dieser Gruppen kann schematisch wie folgt dargestellt werden: 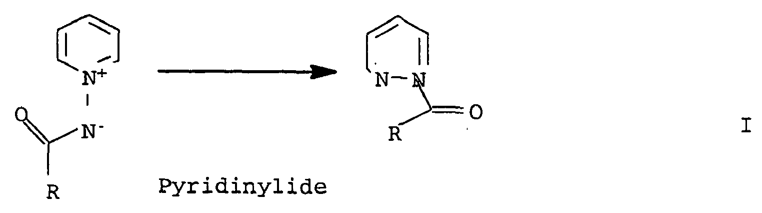 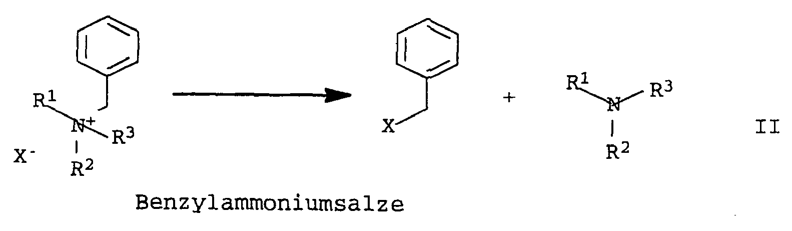 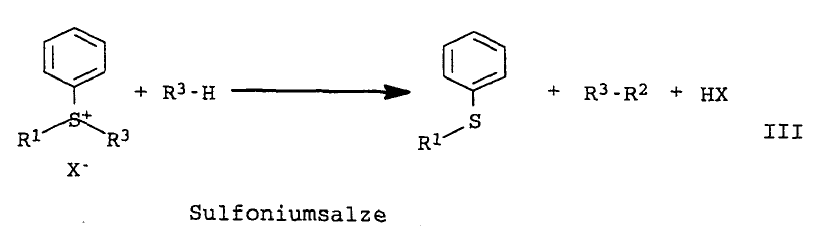 R, R¹, R² und R³ stehen jeweils für organische Reste, X- für ein Anion.

Bei den Dispergiermitteln kann es sich um niedermolekulare Emulgatoren handeln, z.B. solche mit einem Molgewicht unter 1000, welche außer der ionischen Gruppe noch eine hydrophobe Gruppe, z.B. langkettige Alkylgruppen enthalten. Zum Beispiel kann in den Darstellungen I bis III einer der Reste R, R¹ bis R³ für eine hydrophobe Gruppe stehen.

Bei den Dispergiermitteln kann es sich insbesondere auch um polymere Verbindungen, z.B. Schutzkolloide handeln. Es kann sich z.B. um Schutzkolloide handeln, welche durch radikalische Polymerisation von Verbindungen mit einer ionischen Gruppe (A) und anderen Verbindungen (B) erhältlich sind. Geeignete radikalisch polymerisierbare Verbindungen (A) mit einer Pyridinylidgruppe sind z.B. solche der Formel: 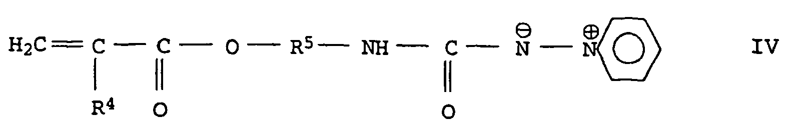 in der R⁴ für ein H-Atom oder eine Methylgruppe und R⁵ für eine organische Gruppe, insbesondere für eine Alkylengruppe, mit 1 bis 30, vorzugsweise 1 bis 10, besonders bevorzugt 1 bis 6 C-Atomen steht.

Geeignete Verbindungen B), welche mit A) copolymerisiert werden können, sind z.B. Vinylaromaten, wie Styrol, (Meth)acrylsäureester, wie C₁-C₁₈-Alkyl(meth)acrylat, Vinylester von Carbonsäuren, z.B. vinylpropionat, Vinylacetat.

Die Herstellung der Schutzkolloide kann nach üblichen Verfahren der radikalischen Polymerisation erfolgen.

Bei den chemischen Verbindungen a), welche mit Hilfe des Dispergiermittels b) in Wasser dispergiert sind, kann es sich z.B. um strahlungshärtbare Polymere, welche durch radikalische Polymerisation erhältlich sind, um strahlungshärtbare Polykondensate, z.B. Polyester oder strahlungshärtbare Polyaddukte, z.B. Polyurethane handeln. Die Dispergiermittel können z.B. auch bereits zur Dispergierung der entsprechenden Ausgangskomponenten in Wasser und während der Umsetzung bzw. Polymerisation der Ausgangskomponenten zu den Endprodukten verwendet werden.

Erfindungsgemäß handelt es sich bei Verbindungen a) um strahlungshärtbare Verbindungen. Strahlungshärtbare Verbindungen enthalten radikalisch oder ionisch polymerisierbare Gruppen. Es kann sich sowohl um niedermolekulare Verbindungen als auch um polymere Verbindungen mit radikalisch oder ionisch polymerisierbaren Gruppen handeln.

Als strahlungshärtbare, radikalisch polymerisierbare Verbindungen kommen Verbindungen mit nur einer ethylenisch ungesättigten, copolymerisierbaren Gruppe in Betracht (Verbindungen I).

Genannt seien z.B. C₁-C₂₀-Alkyl (meth) acrylate, Vinylaromaten mit bis zu 20 C-Atomen, Vinylester von bis zu 20 C-Atomen enthaltenden Carbonsäuren, ethylenisch ungesättigte Nitrile, Vinylether von 1 bis 10 C-Atome enthaltenden Alkoholen und aliphatischen Kohlenwasserstoffen mit 2 bis 8 C-Atomen und 1 oder 2 Doppelbindungen.

Als (Meth)acrylsäurealkylester bevorzugt sind solche mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat und Vinylacetat.

Als vinylaromatische Verbindungen kommen z.B. Vinyltoluol, α-Butylstyrol, 4-n-Butylstyrol, 4-n-Decylstyrol und vorzugsweise Styrol in Betracht.

Beispiele für Nitrile sind Acrylnitril und Methacrylnitril.

Geeignete Vinylether sind z.B. Vinylmethylether, Vinylisobutylether, Vinylhexyl- und -octylether.

Als nicht aromatische Kohlenwasserstoffe mit 2 bis 8 C-Atomen und eine oder zwei olefinischen Doppelbindungen seien Butadien, Isopren, sowie Ethylen, Propylen und Isobutylen genannt.

Bevorzugte strahlungshärtbare, radikalisch polymerisierbare Verbindungen sind solche mit mehreren polymerisierbaren, ethylenisch ungesättigten Gruppen (Verbindungen II).

Insbesondere handelt es sich bei Verbindungen II) um (Meth)acrylatverbindungen, bevorzugt sind jeweils die Acrylatverbindungen, d.h. die Derivate der Acrylsäure.

Bevorzugte (Meth)acrylat-Verbindungen II) enthalten 2 bis 20, bevorzugt 2 bis 10 und ganz besonders bevorzugt 2 bis 6 copolymerisierbare, ethylenisch ungesättigte Doppelbindungen.

Das zahlenmittlere Molekulargewicht Mₙ der (Meth)acrylatverbindungen II) liegt bevorzugt unter 15000, besonders bevorzugt unter 5000, ganz besonders bevorzugt unter 3000 g/mol und über 180 g/mol (bestimmt durch Gelpermeationschromatographie mit Polystyrol als Standard und Tetrahydrofuran als Elutionsmittel).

Als (Meth)acrylatverbindungen genannt seien (Meth)acrylsäureester und insbesondere Acrylsäureester von mehrfunktionellen Alkoholen, insbesondere solchen, die neben den Hydroxylgruppen keine weiteren funktionellen Gruppen oder allenfalls Ethergruppen enthalten. Beispiele solcher Alkohole sind z.B. bifunktionelle Alkohole, wie Ethylenglykol, Propylenglykol, und deren höher kondensierte Vertreter, z.B. wie Diethylenglykol, Triethylenglykol, Dipropylenglykol, Tripropylenglykol etc., Butandiol, Pentandiol, Hexandiol, Neopentylglykol, alkoxylierte phenolische Verbindungen, wie ethoxylierte bzw. propoxylierte Bisphenole, Cyclohexandimethanol, trifunktionelle und höherfunktionelle Alkohole, wie Glycerin, Trimethylolpropan, Butantriol, Trimethylolethan, Pentaerythrit, Ditrimethylolpropan, Dipentaerythrit, Sorbit, Mannit und die entsprechenden alkoxylierten, insbesondere ethoxy- und propoxylierte Alkohole.

Die Alkoxylierungsprodukte sind in bekannter weise durch Umsetzung der vorstehenden Alkohole mit Alkylenoxiden, insbesondere Ethylen- oder Propylenoxid, erhältlich. Vorzugsweise beträgt der Alkoxylierungsgrad je Hydroxylgruppe 0 bis 10, d.h. 1 mol Hydroxylgruppe kann vorzugsweise mit bis zu 10 mol Alkylenoxiden alkoxyliert sein.

Als (Meth)acrylatverbindungen seien weiterhin Polyester(meth)acrylate genannt, wobei es sich um die (Meth)Acrylsäureester von Polyesterolen handelt.

Als Polyesterole kommen z.B. solche in Betracht, wie sie durch Veresterung von Polycarbonsäuren, vorzugsweise Dicarbonsäuren, mit Polyolen, vorzugsweise Diolen, hergestellt werden können. Die Ausgangsstoffe für solche hydroxylgruppenhaltige Polyester sind dem Fachmann bekannt. Bevorzugt können als Dicarbonsäuren Bernsteinsäure, Glutarsäure, Adipinsäure, Sebacinsäure, o-Phthalsäure, deren Isomere und Hydrierungsprodukte sowie veresterbare Derivate, wie Anhydride oder Dialkylester der genannten Säuren eingesetzt werden. Als Polyole kommen die oben genannten Alkohole, vorzugsweise Ethylenglykol, Propylenglykol-1,2 und -1,3, Butandiol-1,4, Hexandiol-1,6, Neopentylglykol, Cyclohexandimethanol sowie Polyglykole vom Typ des Ethylenglykols und Propylenglykols in Betracht.

Polyester(meth)acrylate können in mehreren Stufen oder auch einstufig, wie z.B. in EP 279 303 beschrieben, aus Acrylsäure, Polycarbonsäure, Polyol hergestellt werden.

Weiterhin kann es sich bei Verbindungen II) z.B. um Epoxid-, Melamin- oder Urethan(meth)acrylate handeln.

Urethan(meth)acrylate sind z.B. erhältlich durch Umsetzung von Polyisocyanaten mit Hydroxyalkyl(meth)acrylaten und gegebenenfalls Kettenverlängerungsmitteln wie Diolen, Polyolen, Diaminen, Polyaminen oder Dithiolen oder Polythiolen. In Wasser ohne Zusatz von Emulgatoren dispergierbare Urethanacrylate enthalten zusätzlich noch ionische und/oder nicht ionische hydrophile Gruppen, welche z.B. durch Aufbaukomponenten wie Hydroxycarbonsäuren ins Urethanacrylat eingebracht werden.

Die Urethan(meth)acrylate haben vorzugsweise ein zahlenmittleres Molgewicht Mₙ von 500 bis 20 000, insbesondere von 750 bis 10 000 besonders bevorzugt 750 bis 3000 g/mol (bestimmt durch Gelpermeationschromatographie mit Polystyrol als Standard).

Die Urethan(meth)acrylate haben vorzugsweise einen Gehalt von 1 bis 5, besonders bevorzugt von 2 bis 4 Mol (Meth)acrylgruppen pro 1000 g Urethan(meth)acrylat.

Bevorzugte Aufbaukomponenten der Urethan(meth)acrylate sind C₁₋C₈-Hydroxyalkyl(meth)acrylate, C₂₋C₈-Alkandiole bzw. -polyole oder C₂-C₈-Alkamine als Kettenverlängerer; weiterhin können die Urethanacrylate auch Polyesterole oder Polyetherole als Aufbaukomponenten enthalten; bevorzugte Polyisocyanate sind

Dicyclohexylmethan-4,4'-diisocyanat, Hexamethylen-diisocyanat, Isophorondiisocyanat, Tetramethylen-diisocyanat, Trimethyl-hexamethylen-diisocyanat, Addukte von solchen Isocyanaten an mehrfunktionellen Alkoholen wie Trimethylolpropan, Di- oder Trimerisationsprodukte der Isocyanate, wie Biurete oder Isocyanurate.

Bevorzugt, insbesondere für Außenanwendungen sind aliphatische Polyisocyanate, wobei der Begriff aliphatisch auch nicht aromatische alicyclische Verbindungen einschließen soll.

Bevorzugte Urethan(meth)acrylate, insbesondere für Außenanwendungen, sind aliphatische Urethanacrylate, welche aromatische Ringsysteme allenfalls in untergeordneten Mengen von z.B. weniger als 5 Gew.-%, bezogen auf die Urethanacrylate, und besonders bevorzugt keine aromatischen Ringsysteme enthalten.

Epoxid(meth)acrylate sind erhältlich durch Umsetzung von Epoxiden mit (Meth)acrylsäure. Als Epoxide in Betracht kommen z.B epoxidierte Olefine oder Glycidylether, z.B. Bisphenol-A-diglycidylether oder aliphatische Glycidylether, wie Butandiol-diglycidether.

Melamin(meth)acrylate sind erhältlich durch Umsetzung von Melamin mit (Meth)acrylsäure.

Die Epoxid(meth)acrylate und Melamin(meth)acrylate haben vorzugsweise ein zahlenmittleres Molgewicht Mₙ von 500 bis 20000, besonders bevorzugt von 750 bis 10000 g/mol und ganz besonders bevorzugt von 750 bis 3000 g/mol; der Gehalt an (Meth)acrylgruppen beträgt vorzugsweise 1 bis 5, besonders bevorzugt 2 bis 4 /pro 1000 g Epoxid(meth)acrylat oder Melamin(meth)acrylat (Gelpermestionschromatographie, PS-Standard, THF-Lösemittel).

Als strahlungshärtbare Verbindungen II) kommen z.B. auch ungesättigte Polyesterharze in Betracht, welche im wesentlichen aus Polyolen, insbesondere Diolen, und Polycarbonsäuren, insbesondere Dicarbonsäuren, bestehen, wobei eine der Veresterungskomponenten eine copolymerisierbare, ethylenisch ungesättigte Gruppe enthält. Z.B. handelt es sich dabei um Maleinsäure, Fumarsäure oder Maleinsäureanhydrid.

Bevorzugte strahlungshärtbare Verbindungen sind die Meth(acrylat)verbindungen II).

Verbindungen II) werden oft im Gemisch mit Verbindungen I), welche z.B. als Reaktiwerdünner dienen, verwendet.

Die Herstellung der erfindungsgemäßen wäßrigen Dispersionen kann in einfacher Weise durch Dispergieren der Verbindungen a) in Wasser erfolgen, wobei das Dispergiermittel b) vorab zum Wasser gegeben oder während der Dispergierung zugesetzt wird.

Die wäßrige Dispersion enthält vorzugsweise 0,005 bis 0,1 mol, besonders bevorzugt 0,01 bis 0,05 mol der ionischen Gruppen des Dispergiermittels je 100 g Feststoff, d.h. der Gewichtssumme aus a) und b).

Der Gewichtsanteil des Dispergiermittels beträgt vorzugsweise 0,1 bis 30 Gewichtsteile je 100 Gewichtsteile der Verbindung a).

Die erfindungsgemäßen Dispersionen eignen sich zur Herstellung von Beschichtungen und Formkörpern.

Nachdem die Dispersionen auf Substrate aufgebracht oder in die entsprechende Form gebracht werden und gegebenenfalls nach Trocknung erfolgt vorzugsweise die Umwandlung der ionischen Gruppen des Dispergiermittels in nichtionische Gruppen durch Bestrahlung mit energiereichem Licht, z.B. UV-Licht oder Elektronenstrahlen. Die Dispergiermittel, welche in dem enthaltenen Produkt verbleiben, beeinträchtigen dann kaum noch die Eigenschaften, z.B. die Wasserfestigkeit des Produkts.

Die Umwandlung der ionischen in die nichtionischen Gruppen und die Strahlungshärtung der Verbindung a) kann in einem Arbeitsgang erfolgen, da sich in beiden Fällen UV-Licht oder Elektronenstrahlen eignen.

Zur Strahlungshärtung durch UV-Licht enthalten die wäßrigen Dispersionen vorzugsweise einen Photoinitiator.

### Beispiele

### I. Herstellung der Dispersionen

### Dispersion 1 (D1)

### Schutzkolloid

Das Schutzkolloid wird hergestellt durch Copolymerisation von 1-(2-Methacryloxyethyliminocarbonylimino)pyridinium ylid (entsprechend Beispiel 1 der EP 164100) mit Vinylpropionat im Verhältnis 60:40 analog der Copolymerisationsvorschrift in Bsp. 5 der EP 164100. Das Polymer ist wasserlöslich.

### Polyurethanharz

1500 Teile Isocyanurat des Hexamethylendiisocyanats (Basonat® HI 100, BASF AG), 2,26 Teile 2,6-Di-tertiärbutyl-p-kresol und 1,13 Teile Hydrochinon-mono-methylether werden auf 60°C erhitzt, 0,24 Teile Dibutyl-zinn-dilaurat zugegeben und während 20 Minuten unter Rühren und Kühlung 683 Teile Hydroxyethylacrylat zugetropft, so daß die Temperatur nicht über 75°C steigt. Nach 4-stündiger Reaktion bei 70-75°C betrug der Isocyanatgehalt 2,4 %. Das Reaktionsprodukt wird auf 55°C abgekühlt und dann innerhalb 15 Minuten unter intensiver Kühlung 75 Teile Methanol zugegeben und weitere 2,5 Stunden bei 70-75°C nachreagiert. Nach Filtration über ein 80 µm Filter erhält man ein Produkt mit einer Viskosität von 80 Pas.

### Dispergierung:

Das so hergestellte Urethanacrylat wird in die wäßrige Lösung des Schutzkolloids unter starken Rühren dispergiert. Es resultiert eine Teilchengrößenverteilung von 0,5 - ca 10 µm.

### Vergleichsdispersion (V1)

Es wird verfahren wie bei Dispersion 1, jedoch wird als Schutzkolloid ein Copolymer aus Vinylpyrrolidon und Vinylpropionat verwendet.

### II. Herstellung der Beschichtungen

In die Dispersion 1 und Vergleichsdispersion 1 rührt man 4 Gew.-% eines alpha-Hydroxyketon Photoinitiators (Irgacure® 2959 der Ciba Specialties), rakelt eine Naßschichtdicke von 200 µm auf eine Glasplatte und belichtet mit einer IST UV Anlage bei einer Bandgeschwindigkeit von 10m/min (zwei Durchgänge) mit einem Hg-Hochdrucksträhler, 120 W/cm; Objektabstand 10 cm.

### III. Prüfungen

### Kontaktwinkel

Zur Bestimmung der Hydrophilie der Oberfläche der Beschichtung wird der Kontaktwinkel eines Wassertropfens auf der Oberfläche gemessen. Die Methode ist in Adamson, A.W., Physical Chemistry of Surfaces, 5th ed., Wiley, New York, Chapt. X, beschrieben.

Grundsätzlich gilt: Je höher die Hydrophobie, desto größer ist der Kontaktwinkel.

### Chemikalienbeständigkeit und Wasserbeständigkeit

Auf die Beschichtungen werden Tropfen von verschiedenen Chemikalien aufgebracht und bei verschiedenen Temperaturen 24 h einwirken lassen. Nach der Einwirkzeit wird beurteilt, ab welcher Temperatur eine Schädigung der Lackoberfläche auftritt. Die Ergebnisse aller Prüfungen sind in der Tabelle zusammengestellt.

**Tabelle**

| Beständigkeit | D1 | V1 |
|---|---|---|
| Wasser | > 80°C | 55°C |
| Pankreatin + H₂O 1:1 | 62°C | 60°C |
| 5 %ige NaOH | 49°C | 40°C |
| 10 %ige H₂SO₄ | 54°C | 40°C |
| Kontaktwinkel | 75° | 59° |

## Patentansprüche

1. Wäßrige Dispersionen von chemischen Verbindungen a), wobei die Verbindungen mit Hilfe eines ionischen Dispergiermittels b) dispergiert sind und die ionischen Gruppen des Dispergierhilfsmittels durch Bestrahlung mit energiereichem Licht in nichtionische Gruppen umwandelbar sind, **dadurch gekennzeichnet, daß** es sich bei den Verbindungen a) um strahlungshärtbare Verbindungen handelt.

2. Wäßrige Dispersionen gemäß Anspruch 1, **dadurch gekennzeichnet, daß** es sich bei den ionischen Gruppen des Dispergiermittels um Pyridinylid-, Benzylammonium- oder Sulfoniumsalzgruppen handelt.

3. Wäßrige Dispersionen gemäß Anspruch 1 oder 2, **dadurch gekennzeichnet, daß** die wäßrige Dispersion 0,005 bis 0,1 mol der ionischen Gruppen pro 100 g Feststoff, d.h. der Gewichtssumme aus a) und b) enthält.

4. Wäßrige Dispersionen gemäß einem der Ansprüche 1 bis 3, **dadurch gekennzeichnet, daß** der Gewichtsanteil des Dispergiermittels 0,1 bis 30 Gewichtsteile je 100 Gewichtsteile der Verbindungen a) beträgt.

5. Wäßrige Dispersionen gemäß einem der Ansprüche 1 bis 4, **dadurch gekennzeichnet, daß** es sich bei den Verbindungen a) um Verbindungen mit Acryl- oder Methacrylgruppen handelt.

6. Verwendung der wäßrigen Dispersionen gemäß einem der Ansprüche 1 bis 5 zur Herstellung von Beschichtungen oder Formkörpern.

7. Verfahren zur Herstellung von Beschichtungen oder Formkörpern, **dadurch gekennzeichnet, daß** wäßrige Dispersionen gemäß einem der Ansprüche 1 bis 4 auf Substrate aufgetragen oder in eine entsprechende Form gebracht werden und anschließend mit energiereichem Licht bestrahlt werden.

8. Beschichtete Substrate oder Formkörper, erhältlich nach dem Verfahren gemäß Anspruch 7.

## Claims

1. An aqueous dispersion of chemical compounds a), the compounds being dispersed with the aid of an ionic dispersant b) and the ionic groups of the dispersing aid being convertible into nonionic groups by irradiation with high-energy light, wherein the compounds a) are radiation-curable compounds.

2. The aqueous dispersion according to claim 1, wherein the ionic groups of the dispersant are pyridinylide groups, benzylammonium salt groups or sulfonium salt groups.

3. The aqueous dispersion according to claim 1 or 2, which comprises from 0.005 to 0.1 mol of ionic groups per 100 g of solid, i.e., the summated weight of a) and b).

4. The aqueous dispersion according to any one of claims 1 to 3, wherein the mass fraction of the dispersant is from 0.1 to 30 parts by weight per 100 parts by weight of the compounds a).

5. The aqueous dispersion according to any one of claims 1 to 4, wherein the compounds a) are compounds having acrylic or methacrylic groups.

6. The use of the aqueous dispersion according to any one of claims 1 to 5 for producing a coating or molding.

7. A process for producing a coating or molding, which comprises applying the aqueous dispersion according to any one of claims 1 to 4 to a substrate or bringing it into an appropriate shape and then subjecting it to irradiation with high-energy light.

8. A coated substrate or a molding obtainable by the process according to claim 7.

## Revendications

1. Dispersions aqueuses de composés chimiques a), dans lesquelles les composés sont dispersés à l'aide d'un agent dispersant ionique b) et les groupes ioniques de l'adjuvant de dispersion sont transformables en groupes non ioniques par irradiation par de la lumière riche en énergie, **caractérisées en ce que**, pour ce qui concerne les composés a), il s'agit de composés durcissables par un rayonnement.

2. Dispersions aqueuses suivant la revendication 1, **caractérisées en ce que**, pour ce qui concerne les groupes ioniques de l'agent dispersant, il s'agit de groupes pyridinylide, sel de benzylammonium ou sel de sulfonium.

3. Dispersions aqueuses suivant la revendication 1 ou 2, **caractérisées en ce que** la dispersion aqueuse contient 0,005 à 0,1 mole des groupes ioniques par 100 g de matière solide, c'est-à-dire de la somme pondérale de a) et de b).

4. Dispersions aqueuses suivant l'une des revendications 1 à 3, **caractérisées en ce que** la fraction en poids de l'agent dispersant est de 0,1 à 30 parties en poids par 100 parties en poids des composés a).

5. Dispersions aqueuses suivant l'une des revendications 1 à 4, **caractérisées en ce que**, pour ce qui concerne les composés a), il s'agit de composés comportant des groupes acryliques ou méthacryliques.

6. Utilisation des dispersions aqueuses suivant l'une des revendications 1 à 5, pour la préparation de revêtements ou de corps façonnés.

7. Procédé de préparation de revêtements ou de corps façonnés, **caractérisé en ce que** des dispersions aqueuses suivant l'une des revendications 1 à 4 sont appliquées sur des substrats ou amenées sous une forme correspondante et sont ensuite irradiées par une lumière riche en énergie.

8. Substrats revêtus ou corps façonnés, que l'on peut obtenir suivant le procédé selon la revendication 7.
